# EUROPÄISCHE PATENTSCHRIFT

(11) **EP 1 963 119 B1**
(45) Veröffentlichungstag und Bekanntmachung des Hinweises auf die Patenterteilung: **12.10.2011**
(21) Anmeldenummer: 06828706.9
(22) Anmeldetag: 19.12.2006
(51) Int. Cl.: B60H 1/22, B60K 15/00, F23K 5/00

(54) **KRAFTSTOFFTANK UND KRAFTSTOFFENTNAHMESYSTEM FÜR EIN ZUSATZHEIZGERÄT**
FUEL TANK AND FUEL EXTRACTION SYSTEM FOR AN AUXILIARY HEATING UNIT
RÉSERVOIR ET SYSTÈME DE SOUTIRAGE DE CARBURANT POUR APPAREIL DE CHAUFFAGE D'APPOINT

(30) Priorität: 22.12.2005 DE 102005061604
(43) Veröffentlichungstag der Anmeldung: 03.09.2008
(73) Patentinhaber: Webasto AG, 82131 Stockdorf (DE)
(72) Erfinder: ELM, Nils Dr., 82205 Gilching (DE); KÖHLER, Karsten, 81547 München (DE)
(86) Internationale Anmeldenummer: PCT/DE2006/002276
(87) Internationale Veröffentlichungsnummer: WO 2007/076823

(56) Entgegenhaltungen:
- DE-A1- 2 327 830
- DE-C2- 19 842 604

## Beschreibung

Die Erfindung betrifft einen Kraftstofftank mit einem Kraftstoffentnahmesystem für ein Zusatzheizgerät zur Entnahme von Kraftstoff aus einem Kraftstofftank eines Kraftfahrzeuges, wobei das Kraftstoffentnahmesystem einen Sammelbehälter aufweist, der im Kraftstofftank aufgenommen und ausschließlich dem Zusatzheizgerät zugeordnet ist, und wobei das Kraftstoffentnahmesystem eine Entnahmeleitung zum Ansaugen des Kraftstoffes aufweist, wobei das saugende Ende der Entnahmeleitung von dem Sammelbehälter umgeben wird, der oben zumindest teilweise offen ist.

Darüber hinaus betrifft die Erfindung ein Zusatzheizgerät und ein Kraftfahrzeug mit einem solchen Kraftstoffentnahmesystem für ein Zusatzheizgerät.

Des Weiteren betrifft die Erfindung ein Verfahren zur Kraftstoffentnahme für ein Zusatzheizgerät zur Entnahme von Kraftstoff aus einem Kraftstofftank eines Kraftfahrzeuges, wobei der Kraftstoff aus einem im Kraftstofftank aufgenommenen Sammelbehälter entnommen wird, der ausschließlich dem Zusatzheizgerät zugeordnet ist, und wobei der Kraftstoff über eine Entnahmeleitung aus dem Sammelbehälter angesaugt wird, deren saugendes Ende von dem Sammelbehälter umgeben wird, der oben zumindest teilweise offen ist.

Ein derartiges Kraftstoffentnahmesystem und ein derartiges Verfahren sind aus der deutschen Offenlegungsschrift 2327830 bekannt, wobei dort allerdings vorgesehen ist, dass der Sammelbehälter oberhalb des Zusatzheizgerätes angeordnet ist und über eine vom Kraftfahrzeugvergaser kommende Rücklaufleitung gespeist wird, um im Ergebnis mit niedrigen Kraftstoffdrücken arbeiten zu können, ohne für das Zusatzheizgerät eine spezielle Brennstoffpumpe vorsehen zu müssen.

Gemäß einem vollkommen anderen Ansatz wurde der Kraftstoff für Zusatzheizgeräte der Verbrennungsbauart in der Vergangenheit mit einem Rohr aus einem Kraftstofftank eines Kraftfahrzeuges entnommen. Hierbei ergibt sich jedoch der Nachteil, dass besonders bei niedrigem Füllstand des Kraftstoffes im Kraftstofftank der Kraftstoff von einem Ansaugrohr wegschwappen kann. Darüber hinaus besteht die Gefahr, dass im Kraftstoff enthaltene Blasen oder Schäume, die sich vorwiegend an der Kraftstoffoberfläche befinden, in das Ansaugrohr gesaugt werden. Für die Kraftstoffversorgung des Verbrennungsmotors des Kraftfahrzeuges wird der Kraftstoff aus dem Kraftstofftank mittels eines eingebauten Schwalltopfs entnommen. Diese Schwalltöpfe sind am Kraftstofftankboden angeordnet und werden durch Überlaufen des Kraftstoffs über die Oberkante des Schwalltopfs, durch eine mit Ventil versehene Öffnung im Boden des Schwalltopfs und durch eine Saugstrahlpumpe befüllt. Der Schwalltopf bevorratet Kraftstoff auch dann, wenn der Kraftstoff im Tank hin und her schwappt. Dadurch wird gewährleistet, dass am Ansaugrohr für die Kraftstoffversorgung des Verbrennungsmotors bei allen Fahrsituationen Kraftstoff ansteht.

Eine deutliche Verbesserung des Betriebes des Zusatzheizgerätes wurde dadurch erreicht, dass der Kraftstoff aus dem Schwalltopf entnommen wird, da hier der Kraftstoff weniger wegschwappt. Eine entsprechende Vorrichtung zur Ansaugung von Kraftstoff aus einem im Bodenbereich eines Kraftstoffbehälters angeordneten Schwalltopfs ist beispielsweise aus der DE 19842604 C2 bekannt. Der Kraftstoff im Schwalltopf enthält aber auch häufig Blasen oder ist aufgeschäumt. Darüber hinaus kann der Kraftstoff auch im Schwalltopf schwappen, wenn auch im geringerem Ausmaß als im Kraftstofftank. Die Blasen und Schäume im Kraftstoff werden von einer Dosierpumpe des Zusatzheizgerätes angesaugt. Darüber hinaus wird Luft angesaugt, wenn der Kraftstoff vom Ansaugrohr wegschwappt. Verbrennungsheizgeräte reagieren sehr empfindlich auf Blasen in der Kraftstoffzufuhr, welche zu unsauberem Brennverhalten führen. Größere Blasen führen sogar zum Erlöschen der Flamme, was zu störender Qualmentwicklung führt. Obwohl die oben erwähnte deutsche Offenlegungsschrift 2327830, wie erwähnt, einen anderen Ansatz als die Verwendung eines Schwalltopfes verfolgt, treten die Probleme des Wegschwappens des Kraftstoffs vom Ansaugrohr auch dort auf, insbesondere weil der dort vorgeschlagene hoch angeordnete Sammelbehälter zur Verringerung von Kraftstoffspiegeldifferenzen eine möglichst große Grundfläche haben soll, was das ein Hin- und Herschwappen des Kraftstoffs sogar noch zusätzlich begünstigt.

Es ist daher die Aufgabe der vorliegenden Erfindung das gattungsgemäße Kraftstoffentnahmesystem für ein Zusatzheizgerät, das gattungsgemäße Zusatzheizgerät, das gattungsgemäße Kraftfahrzeug und das gattungsgemäße Verfahren derart weiterzubilden, dass eine optimierte Kraftstoffversorgung eines Zusatzheizgerätes sichergestellt werden kann.

Diese Aufgabe wird durch die Merkmale der unabhängigen Ansprüche gelöst.

Vorteilhafte Ausgestaltungen und Weiterbildungen der Erfindung ergeben sich aus den abhängigen Ansprüchen.

Der erfindungsgemäße Kraftstofftank und Kraftstoffentnahmesystem für ein Zusatzheizgerät baut auf dem gattungsgemäßen Stand der Technik dadurch auf, dass der Sammelbehälter derart im Kraftstofftank positioniert und zu dem Zweck oben zumindest teilweise offen ist, dass Kraftstoff über die O-berkante in den Sammelbehälter laufen kann. Durch einen derartigen Aufbau des Kraftstoffentnahmesystems ist ein Kraftstoffsammelraum geschaffen, in dem ein Schwappen des Kraftstoffs minimiert werden kann. Durch die Maßnahme, dass der Sammelbehälter ausschließlich dem Zusatzheizgerät zugeordnet ist kann er speziell auf die Anforderungen für das Zusatzheizgerät ausgelegt werden. Da ein Zusatzheizgerät weniger Kraftstoff verbraucht als ein Verbrennungsmotor, kann der Sammelbehälter, der ausschließlich dem Zusatzheizgerät zugeordnet ist, kleiner ausgelegt werden als herkömmliche Schwalltöpfe für die Kraftstoffversorgung von Verbrennungsmotoren. Bevorzugter Weise ist der Sammelbehälter deutlich kleiner als bisherige Schwalltöpfe, so dass ein Schwappen des Kraftstoffes auf ein äußerstes minimiert werden kann.

Wenn der Sammelbehälter ausschließlich dem Zusatzheizgerät zugeordnet ist hat dies den weiteren Vorteil, dass im Standheizbetrieb nicht der Fall eintritt, dass das Zusatzheizgerät bei nahezu leerem Kraftstofftank, den im Sammelbehälter befindlichen Kraftstoff verbrennt und auf Grund des nahezu leeren Kraftstofftanks kein Kraftstoff in den Sammelbehälter nachströmt, so dass für einen Start des Verbrennungsmotors kein Kraftstoff mehr im selbem Sammelbehälter zur Verfügung steht. Ein weiterer Vorteil besteht darin, dass sich das saugende Ende der Entnahmeleitung unterhalb der Füllkante des Sammelbehälters befindet. Dadurch steigen Blasen und Schaum die/der in den Sammelbehälter gelangen/gelangt, aufgrund der Schwerkraft auf, so dass sich diese Blasen und der Schaum an der Füllkante befinden. Der unterhalb der Füllkante angesaugte Kraftstoff ist somit blasen- und schaumarm.

Der erfindungsgemäße Kraftstofftank und Krasftstoffentnahmesystem kann dadurch weitergebildet sein, dass der Sammelbehälter in einem im Kraftstofftank befindlichen Schwalltopf aufgenommen ist. Dadurch dass der Sammelbehälter im Schwalltopf aufgenommen ist, ist der Sammelbehälter zwangsläufig kleiner als der Schwalltopf, wodurch der Kraftstoff im Sammelbehälter weniger schwappt als im Schwalltopf. Das Schwappen des Kraftstoffs wird somit zunächst durch den Schwalltopf gegenüber dem Kraftstofftank verringert und dann nochmals durch den Sammelbehälter gegenüber dem Schwalltopf verringert. Somit kann der Kraftstoff blasen- und schaumarm entnommen werden. Durch diese verbesserte Kraftstoffentnahme wird ein wesentlich verbessertes Brennverhalten des Zusatzheizgerätes erzielt.

Ferner kann der erfindungsgemäße Kraftstofftank und Kraftstoffentnahmesystem so ausgebildet sein, dass eine obere Öffnung des Sammelbehälters mit einem Löcher aufweisenden Deckel versehen ist. Durch diesen Deckel kann ein Leerschwappen des Sammelbehälters erschwert werden.

Darüber hinaus kann der erfindungsgemäße Kraftstofftank und Kraftstoffentnahmesystem so ausgebildet sein, dass eine obere Öffnung des Sammelbehälters mit einem Sieb abgedeckt ist. Durch dieses Sieb können Blasen und/oder Schmutz abgewiesen werden.

Darüber hinaus kann der erfindungsgemäße Kraftstofftank und Kraftstoffentnahmesystem derart weitergebildet sein, dass der Sammelbehälter mit dem Schwalltopf verbunden ist. Durch diese Weiterbildung kann der Sammelbehälter bereits bei der Herstellung des Schwalltopfs in diesem ausgebildet werden, wodurch eine einfache Montage des Kraftstoffentnahmesystems gewährleistet ist.

Des Weiteren kann der erfindungsgemäße Kraftstofftank und Kraftstoffentnahmesystem so weitergebildet sein, dass der Sammelbehälter berührungsfrei zum Schwalltopf im Schwalltopf aufgenommen ist. Der Abstand zwischen einem Kraftstofftankboden und einer Kraftstofftankdecke verändert sich unter anderem in Abhängigkeit vom Kraftstofffüllstand, vom Druck im Tank und von der Temperatur. Da eine Kraftstoffentnahme in der Regel über die Kraftstofftankdecke vollzogen wird und sich der Schwalltopf in der Regel am Kraftstofftankboden befindet, ist es vorteilhaft, wenn der Sammelbehälter diesem veränderten Abstand folgen kann. Durch die berührungsfreie Aufnahme des Sammelbehälters im Schwalltopf, kann der Sammel- behälter mit der Veränderung des Abstandes zwischen Kraftstofftankboden und Kraftstofftankdecke angehoben und abgesenkt werden, so dass keine Beschädigung des Kraftstoffentnahmesystems entsteht.

Alternativ kann der Kraftstofftank und Kraftstoffentnahmesystem auch so ausgebildet sein, dass die Entnahmeleitung einen flexiblen Abschnitt aufweist. Durch diesen flexiblen Abschnitt kann die eben beschriebene Veränderung des Abstands zwischen einem Kraftstofftankboden und einer Kraftstofftankdecke ausgeglichen werden.

Für das erfindungsgemäße Zusatzheizgerät, das erfindungsgemäße Kraftfahrzeug und das erfindungsgemäße Verfahren ergeben sich die vorstehend beschriebenen Vorteile in übertragener Weise.

Bevorzugte Ausführungsformen der Erfindung werden nachfolgend anhand der Figuren beispielhaft erläutert.

Es zeigen:
- Figur 1: ein erstes Ausführungsbeispiel des erfindungsge- mäßen Kraftstofftanks und Kraftstoffentnahmesystems; und
- Figur 2: ein zweites Ausführungsbeispiel des erfindungsge- maßen Kraftstofftanks und Kraftstoffentnahmesystems.

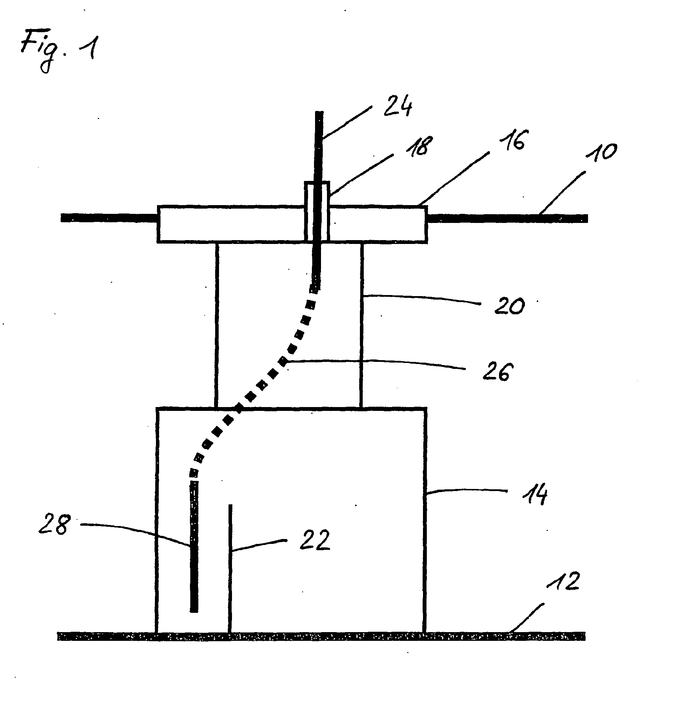

Figur 1 zeigt ein erstes Ausführungsbeispiel des erfindungsgemäßen Kraftstoffentnahmesystems. Von einem Kraftstofftank ist ein Ausschnitt dargestellt, der eine Kraftstofftankdecke 10 und einen Kraftstofftankboden 12 umfasst. Am Kraftstofftankboden 12 ist ein Schwalltopf 14 angeordnet. Auf der gleichen vertikalen Linie, auf der sich der Schwalltopf 14 befindet, ist in der Kraftstofftankdecke 10 eine flachzylindrische Schwalltopfarmatur 16 eingefügt. In der Schwalltopfarmatur 16 ist eine Öffnung vorgesehen, welche mit einem Entnahmestutzen 18 versehen ist. Der Schwalltopf 14 ist ein zylindrischer und oben offener Behälter. Die der Kraftstofftankdecke 10 zugewandte Seite des Schwalltopfs 14 ist beispielsweise mit einem große Löcher aufweisenden Deckel versehen, um ein Volllaufen des Schwalltopfs mit Kraftstoff über die Oberkante zuzulassen. Zwischen dem Deckel des Schwalltopfs 14 und der Schwalltopfarmatur 16 ist ein Verbindungselement 20 angeordnet, welches mit der Schwalltopfarmatur 16 und dem Schwalltopf 14 verbunden ist oder gegen diese abgestützt ist. Anstatt des eben erwähnten Deckels auf der Oberkante des Schwalltopfs 14 können ebenso Stege vorgesehen sein, die ermöglichen, den Schwalltopf 14 gegen das Verbindungselement 20 abzustützen. Der Schwalltopf 14 ist mit dem Kraftstofftankboden 12 verbunden, einstückig mit diesem ausgebildet oder wird mittels der Schwalltopfarmatur 16 gehalten bzw. gegen den Kraftstofftankboden 12 gedrückt. Im Schwalltopf 14 ist ein Sammelbehälter 22 angeordnet. Dieser Sammelbehälter 22 kann als eigenes Bauteil fest mit dem Schwalltopf 14 verbunden werden oder kann ein Bestandteil des Schwalltopfs 14 sein, indem er in den Schwalltopf eingespritzt oder eingegossen wird. Die feste Verbindung kann beispielsweise mittels einer Steck- oder Schraubverbindung realisiert werden. Der Sammelbehälter 22 ist bevorzugter Weise zylinderförmig und kann oben völlig offen sein, wie in Figur 1 dargestellt. Außerdem kann der Sammelbehälter 22 mit einem nicht dargestellten Sieb oder einem mit Öffnungen versehenen Deckel abgedeckt werden. Der Sammelbehälter 22 ist deutlich kleiner als der Schwalltopf 14. Der Boden des Sammelbehälters 22 ist am Boden des Schwalltopfs 14 angeordnet. Alternativ wird der Boden des Sammelbehälters 22 vom Boden des Schwalltopfs 14 gebildet, oder sowohl der Boden des Schwalltopfs 14 als auch der Boden des Sammelbehälters 22 werden durch den Kraftstofftankboden 12 gebildet. Zur Entnahme von Kraftstoff ist in den Entnahmestutzen 18 ein Entnahmerohr 24 eingefügt, welches etwas in das Verbindungselement 20 ragt. An das Entnahmerohr 24 schließt im Verbindungselement 20 ein flexibler Schlauch 26 an, der fast bis zur Oberkante des Sammelbehälters 22 im Schwalltopf 14 führt. An dieses Ende des flexiblen Schlauchs 26 schließt ein Ansaugrohr 28 an, dessen Länge in etwa der Höhe des Sammelbehälters 22 entspricht. Dieses Ansaugrohr 28 reicht in den Sammelbehälter 22 und endet in der Nähe des Bodens des Sammelbehälters 22. Das Entnahmerohr 24, der flexible Schlauch 26 und das Ansaugrohr 28 bilden somit eine Entnahmeleitung, welche als einstückiges rohrartiges Element mit einem flexiblen Mittelteil ausgebildet ist. Alternativ könnten das Entnahmerohr 24, der flexible Schlauch 26 und das Ansaugrohr 28 einzelne Elemente sein, die sicher miteinander verbunden werden, beispielsweise durch Aufstülpen der Enden des flexiblen Schlauchs 26 auf die jeweiligen Enden des Entnahmerohrs 24 und des Ansaugrohrs 28. Das Ansaugrohr 28 ist entweder mit dem Sammelbehälter 22 oder mit dem Schwalltopf 14 verbunden. Diese Verbindung kann beispielsweise mittels einer nicht dargestellten Klammer realisiert werden, die am Schwalltopf 14 oder am Sammelbehälter 22 angeordnet ist und das Ansaugrohr 28 in der eben beschriebenen Position festklemmt. Darüber hinaus könnte in die obere Öffnung des Sammelbehälters 22 eine Scheibe eingepresst sein, die eine mittige Öffnung aufweist, deren Durchmesser dem des Ansaugrohrs 28 entspricht, so dass das Ansaugrohr 28 nach dem Einfügen in die mittige Öffnung relativ zum Sammelbehälter 22 fixiert ist und wobei diese Scheibe radial außerhalb dieser mittigen Öffnung Bohrungen aufweist, die ein Füllen des Sammelbehälters 22 mit Kraftstoff ermöglichen. Der Abstand zwischen der Kraftstofftankdecke 10 und dem Kraftstofftankboden 12 verändert sich unter anderem in Abhängigkeit vom Kraftstofftankfüllstand, vom Druck im Kraftstofftank und von der Temperatur. Deshalb verändert die Schwalltopfarmatur 16 ihren Abstand zum Schwalltopf 14. Diese Veränderung des Abstands wirkt sich ebenso auf den Abstand zwischen Entnahmerohr 24 und Ansaugrohr 28 aus, da das Entnahmerohr 24 mit der Schwalltopfarmatur 16 und das Ansaugrohr 28 mit dem Schwalltopf 14 oder dem Sammelbehälter 22 verbunden ist. Dieser Abstandsänderung wird durch den flexiblen Schlauch 26 begegnet, der eine Veränderung des Abstandes durch seine Flexibilität ausgleicht.

In Betrieb befindet sich Kraftstoff im Kraftstofftank, der durch die Bewegung des Kraftfahrzeuges hin und her schwappt. Dabei wird der Schwalltopf 14 durch Überlaufen des Kraftstoffs über die Oberkante des Schwalltopfs 14 befüllt, falls der Schwalltopf 14 oben offen ist oder die obere Öffnung des Schwalltopfs 14 mit einem Gitter versehen ist. Alternativ oder zusätzlich kann der Schwalltopf 14 auch mittels einer mit Ventil versehenen Öffnung im Boden des Schwalltopfes 14 oder durch eine Saugstrahlpumpe befüllt werden. Der Sammelbehälter 22 wird befüllt, indem der sich nun im Schwalltopf 14 befindliche Kraftstoff über die Oberkante des Sammelbehälters 22 einläuft. Der im Sammelbehälter 22 befindliche Kraftstoff wird mittels einer nicht dargestellten Dosierpumpe, die mit dem aus dem Entnahmestutzen 18 herausführenden Entnahmerohr 24 verbunden ist, angesaugt und einem nicht dargestellten Zusatzheizgerät zugeführt. Dabei wird der Kraftstoff in der Nähe des Bodens des Sammelbehälters 22 abgesaugt, wodurch sichergestellt wird, dass immer Kraftstoff am Ansaugrohr 28 ansteht. Blasen oder Schaum im Kraftstoff steigen aufgrund der Schwerkraft auf, so dass am Boden des Sammelbehälters 22 blasen- bzw. schaumarmer Kraftstoff vorliegt. Selbst wenn der Kraftstoff im Schwalltopf 14 schwappt, bleibt der Sammelbehälter 22 aufgrund seiner Form und seines kleineren Durchmessers weitestgehend befüllt.

Hinsichtlich der Festlegung der Höhe des Sammelbehälters 22 ist folgendes zu beachten. Der Sammelbehälter 22 soll mindestens so hoch sein, dass er selbst bei stärkstem Schwappen des Kraftstoffes im Schwalltopf 14 nicht geleert wird. Darüber hinaus soll der Sammelbehälter 22 mindestens so hoch sein, dass über die Oberkante eintretende Blasen nicht am Boden des Sammelbehälters 22 ankommen, da sie genügend Raum zum Aufsteigen haben. Außerdem soll der Sammelbehälter 22 maximal so hoch gewählt werden, dass er durch Überlaufen des Kraftstoffes über die Oberkante des Sammelbehälters 22 ausreichend befüllt wird. Beim Standheizbetrieb kann der Schwalltopf 14 geleert werden, wenn er nicht in ausreichenden Maße von einer Fahrzeug-Kraftstoffpumpe befüllt wird. Die Oberkante des Sammelbehälters 22 entspricht der Höhe bis zu der der Schwalltopf 14 durch die Entnahme von Kraftstoff für das Zusatzheizgerät entleert werden kann. Diese Höhe soll so gewählt werden, dass selbst ohne Befüllung genügend Kraftstoff für den Fahrzeugbetrieb zur Verfügung steht. Diese vorstehend genannten Forderungen werden mit einer Höhe des Sammelbehälters 22 von ca. 4 cm erfüllt.

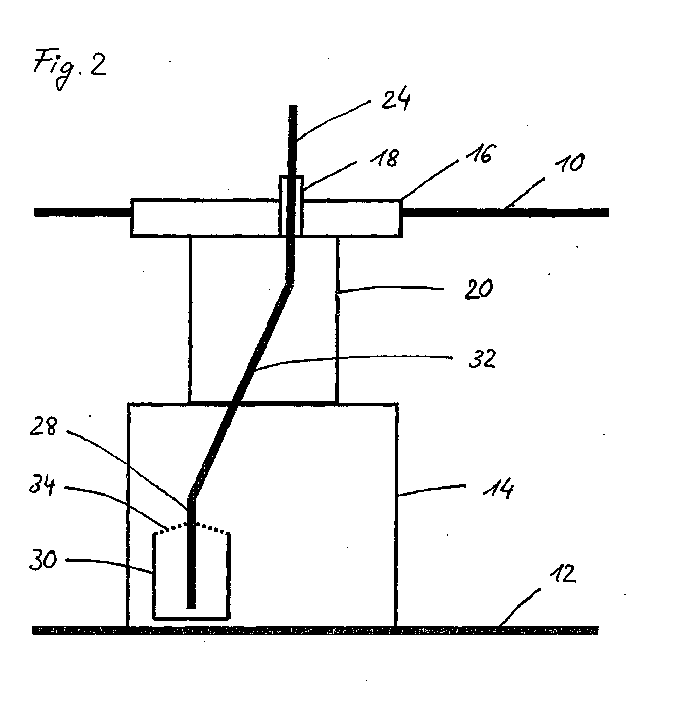

Figur 2 zeigt ein zweites Ausführungsbeispiel des erfindungsgemäßen Kraftstoffentnahmesystems. Im Zusammenhang mit dem zweiten Ausführungsbeispiel, das in Figur 2 dargestellt ist, werden nur Elemente beschrieben, die sich vom ersten Ausführungsbeispiel unterscheiden. Im Unterschied zum Sammelbehälter 22 des ersten Ausführungsbeispiels ist der Sammelbehälter 30 des zweiten Ausführungsbeispiels nicht mit dem Schwalltopf 14 verbunden. Der Sammelbehälter 30 des zweiten Ausführungsbeispiels ist im Schwalltopf 14 aufgenommen und in diesem frei schwebend, ohne Kontakt zum Schwalltopf 14, positioniert. Anstatt des flexiblen Schlauchs 26 des ersten Ausführungsbeispiels ist im zweiten Ausführungsbeispiel ein starres Verbindungsrohr 32 vorgesehen. Die Entnahmeleitung wird demnach durch das in den Entnahmestutzen 18 eingefügte Entnahmerohr 24, den mit dem Entnahmerohr 24 verbundenen Verbindungsrohr 32 und den mit dem Verbindungsrohr verbundenen Ansaugrohr 28 gebildet. Das Entnahmerohr 24, das Verbindungsrohr 32 und das Ansaugrohr 28 können einstückig ausgebildet sein oder diese Rohre können mittels einer Steckverbindung aneinander gekoppelt sein. Das Ansaugrohr 28 ragt in den Sammelbehälter 30, so dass das offene Ende des Ansaugrohrs 30 in der Nähe des Bodens des Sammelbehälters 30 positioniert ist. Der Sammelbehälter 30 kann, wie im Zusammenhang mit dem ersten Ausführungsbeispiel beschrieben, oben offen, mit einem Sieb abgedeckt oder mit einem mit Öffnungen versehenen Deckel abgedeckt sein. Darüber hinaus ist der Sammelbehälter 30 mit dem Ansaugrohr 28 mittels eines Befestigungselements 34 verbunden. Dieses Befestigungselement 34 kann mittels eines auf das Ansaugrohr 28 gepressten Ring realisiert werden, von dem aus sich starre Drähte zur Oberkante des Sammelbehälters 30 erstrecken. Diese Drähte sind einstückig mit der Oberkante des Sammelbehälters 30 verbunden. Mit diesem Befestigungselement 34 kann der Sammelbehälter 22 bei fertig montiertem Schwalltopf 14 nachträglich eingebaut werden. Bei einer Änderung des Abstandes zwischen Schwalltopfarmatur 16 und Schwalltopf 14, wie im Zusammenhang mit dem ersten Ausführungsbeispiel beschrieben, wird der mit der Entnahmeleitung und damit mit der Schwalltopfarmatur 16 verbundene Sammelbehälter 30 bezogen auf den Schwalltopfboden angehoben oder abgesenkt. Hinsichtlich der Abmessungen des Sammelbehälters 30 gilt das für den Sammelbehälter 22 Erwähnte aus dem ersten Ausführungsbeispiel. Der übrige Betrieb der Kraftstoffentnahme entspricht beim zweiten Ausführungsbeispiel dem des ersten Ausführungsbeispiels.

Es sei darauf hingewiesen, dass die Form des Schwalltopfes 14 als auch der Schwalltopfarmatur 16 nicht zylindrisch sein muss und auch eine andere geometrische Form, wie zum Beispiel eine Vieleckform, aufweisen kann.

Ebenso kann der Sammelbehälter 22 jegliche geometrische gefäßartige Form aufweisen, wie beispielsweise jene eines Vielecks in der Draufsicht. Außerdem kann im ersten Ausführungsbeispiel der Sammelbehälter 22 durch zwei Wände ausgebildet werden, die sich von der Innenwand des Schwalltopfs 14 nach innen erstrecken und treffen, so dass sich ein oben offenes Gefäß ergibt, das in der Draufsicht eine Dreiecksform ergibt, wobei eine Seite des Dreiecks von der Außenwand des Schwalltopfs 14 gebildet wird und somit gekrümmt ist.

Darüber hinaus sei darauf hingewiesen, dass obwohl im ersten und zweiten Ausführungsbeispiel der Sammelbehälter 22, 30 immer in einem Schwalltopf 14 angeordnet ist, die Erfindung nicht darauf begrenzt ist. So kann das erfindungsgemäße Kraftstoffentnahmesystem auch ohne Schwalltopf 14 ausgeführt werden.

### Bezugszeichenliste:

- 10: Kraftstofftankdecke
- 12: Kraftstofftankboden
- 14: Schwalltopf
- 16: Schwalltopfarmatur
- 18: Entnahmestutzen
- 20: Verbindungselement
- 22: Sammelbehälter
- 24: Entnahmerohr
- 26: Flexibler Schlauch
- 28: Ansaugrohr
- 30: Sammelbehälter
- 32: Verbindungsrohr
- 34: Befestigungselement

## Patentansprüche

1. Kraftstofftank und Kraftstoffentnahmesystem für ein Zusatzheizgerät zur Entnahme von Kraftstoff aus dem Kraftstofftank (10, 12), wobei das Kraftstoffentnahmesystem einen im Kraftstofftank angeordneten Sammelbehälter (22; 30) aufweist, der für eine ausschließliche Zuordnung zu dem Zusatzheizgerät vorgesehen ist, und wobei das Kraftstoffentnahmesystem eine Entnahmeleitung (24, 26, 28; 24, 32, 28) zum Ansaugen des Kraftstoffes aufweist, wobei das saugende Ende der Entnahmeleitung (24, 26, 28; 24, 32, 28) von dem Sammelbehälter (22; 30) umgeben wird, der oben zumindest teilweise offen ist, **dadurch gekennzeichnet, dass** der Sammelbehälter derart im Kraftstofftank positioniert und zu dem Zweck oben zumindest teilweise offen ist, dass Kraftstoff über die Oberkante in den Sammelbehälter laufen kann.

2. Kraftstofftank und Kraftstoffentnahmesystem gemäß Anspruch 1, **dadurch gekennzeichnet, dass** der Sammelbehälter (22; 30) in einem im Kraftstofftank (10, 12) befindlichen Schwalltopf (14) aufgenommen ist.

3. Kraftstofftank und Kraftstoffentnahmesystem gemäß einem der vorhergehenden Ansprüche, **dadurch gekennzeichnet, dass** eine obere Öffnung des Sammelbehälters (22; 30) mit einem Löcher aufweisenden Deckel versehen ist.

4. Kraftstofftank und Kraftstoffentnahmesystem gemäß einem der vorhergehenden Ansprüche, **dadurch gekennzeichnet, dass** eine obere Öffnung des Sammelbehälters (20; 30) mit einem Sieb abgedeckt ist.

5. Kraftstofftank und Kraftstoffentnahmesystem gemäß Anspruch 2, **dadurch gekennzeichnet, dass** der Sammelbehälter (22) mit dem Schwalltopf (14) verbunden ist.

6. Kraftstofftank und Kraftstoffentnahmesystem gemäß Anspruch 2, **dadurch gekennzeichnet, dass** der Sammelbehälter (30) berührungsfrei zum Schwalltopf (14) im Schwalltopf (14) aufgenommen ist.

7. Kraftstofftank und Kraftstoffentnahmesystem gemäß Anspruch 6, **dadurch gekennzeichnet, dass** die Entnahmeleitung (24, 26, 28) einen flexiblen Abschnitt (26) aufweist.

8. Zusatzheizgerät mit Kraftstofftank und Kraftstoffentnahmesystem gemäß einem der vorhergehenden Ansprüche.

9. Kraftfahrzeug mit Kraftstofftank und Kraftstoffentnahmesystem für ein Zusatzheizgerät gemäß einem der Ansprüche 1 bis 8.

10. Verfahren zur Kraftstoffentnahme für ein Zusatzheizgerät zur Entnahme von Kraftstoff aus einem Kraftstofftank (10, 12) eines Kraftfahrzeuges, wobei der Kraftstoff aus einem im Kraftstofftank (10, 12) aufgenommenen Sammelbehälter (22; 30) entnommen wird, der ausschließlich dem Zusatzheizgerät zugeordnet ist, und wobei der Kraftstoff über eine Entnahmeleitung (24, 26, 28; 24, 32, 28) aus dem Sammelbehälter (22; 30) angesaugt wird, deren saugendes Ende von dem Sammelbehälter (22; 30) umgeben wird, der oben zumindest teilweise offen ist, **dadurch gekennzeichnet, dass** der in dem Sammelbehälter enthaltende Kraftstoff über die Oberkante des zu diesem Zweck oben zumindest teilweise offenen Sammelbehälters in diesen gelaufen ist.

## Claims

1. Fuel tank and fuel extraction system for an auxiliary heating unit for extracting fuel from the fuel tank (10, 12), wherein the fuel extraction system has a collecting container (22; 30) which is arranged in the fuel tank and is provided for exclusive assignment to the auxiliary heating unit, and wherein the fuel extraction system has an extraction line (24, 26, 28; 24, 32, 28) for sucking in the fuel, wherein the sucking end of the extraction line (24, 26, 28; 24, 32, 28) is surrounded by the collecting container (22; 30) which is at least partially open at the top, **characterized in that** the collecting container is positioned in the fuel tank in such a way that fuel can run over the upper edge into the collecting container, and said collecting container is at least partially open at the top for this purpose.

2. Fuel tank and fuel extraction system according to Claim 1, **characterized in that** the collecting container (22; 30) is held in a surge pot (14) which is located in the fuel tank (10, 12).

3. Fuel tank and fuel extraction system according to one of the preceding claims, **characterized in that** an upper opening of the collecting container (22; 30) is provided with a lid which has holes.

4. Fuel tank and fuel extraction system according to one of the preceding claims, **characterized in that** an upper opening in the collecting container (20; 30) is covered with a screen.

5. Fuel tank and fuel extraction system according to Claim 2, **characterized in that** the collecting container (22) is connected to the surge pot (14).

6. Fuel tank and fuel extraction system according to Claim 2, **characterized in that** the collecting container (30) is held in the surge pot (14) without being in contact with the surge pot (14).

7. Fuel tank and fuel extraction system according to Claim 6, **characterized in that** the extraction line (24, 26, 28) has a flexible section (26).

8. Auxiliary heating unit having fuel tank and fuel extraction system according to one of the preceding claims.

9. Motor vehicle having fuel tank and fuel extraction system for an auxiliary heating unit according to one of Claims 1 to 8.

10. Method for extracting fuel for an auxiliary heating unit for the extraction of fuel from a fuel tank (10, 12) of a motor vehicle, wherein the fuel is extracted from a collecting container (22; 30) which is held in the fuel tank (10, 12) and is assigned exclusively to the auxiliary heating unit, and wherein the fuel is sucked in from the collecting container (22; 30) via an extraction line (24, 26, 28; 24, 32, 28), the sucking end of which extraction line (24, 26, 28; 24, 32, 28) is surrounded by the collecting container (22; 30) which is at least partially open at the top, **characterized in that** the fuel which is contained in the collecting container has run into the collecting container via the upper edge of said collecting container which is at least partially open at the top for this purpose.

## Revendications

1. Réservoir de carburant et système de soutirage de carburant pour un appareil de chauffage d'appoint pour soutirer du carburant du réservoir de carburant (10, 12), le système de soutirage de carburant présentant un collecteur (22 ; 30) disposé dans le réservoir de carburant, qui est prévu pour être exclusivement affecté à l'appareil de chauffage d'appoint, le système de soutirage de carburant présentant une conduite de soutirage (24, 26, 28 ; 24, 32. 28) pour aspirer du carburant, l'extrémité d'aspiration de la conduite de soutirage (24, 26, 28 ; 24, 32, 28) étant entourée par le collecteur (22 ; 30), qui est ouvert en haut au moins en partie, **caractérisés en ce que** le collecteur est positionné de telle sorte dans le réservoir de carburant, et est ouvert en haut au moins en partie de telle sorte que du carburant puisse s'écouler par-dessus le bord supérieur dans le collecteur.

2. Réservoir de carburant et système de soutirage de carburant selon la revendication 1, **caractérisés en ce que** le collecteur (22 ; 30) est reçu dans un pot de brise-jet (14) se trouvant dans le réservoir de carburant (10, 12).

3. Réservoir de carburant et système de soutirage de carburant selon l'une quelconque des revendications précédentes, **caractérisés en ce qu'**une ouverture supérieure du collecteur (22 ; 30) est pourvue d'un couvercle présentant des trous.

4. Réservoir de carburant et système de soutirage de carburant selon l'une quelconque des revendications précédentes, **caractérisés en ce qu'**une ouverture supérieure du collecteur (20 ; 30) est recouverte d'un filtre.

5. Réservoir de carburant et système de soutirage de carburant selon la revendication 2, **caractérisés en ce que** le collecteur (22) est connecté au pot de brise-jet (14).

6. Réservoir de carburant et système de soutirage de carburant selon la revendication 2, **caractérisés en ce que** le collecteur (30) est reçu sans contact avec le pot de brise-jet (14) dans le pot de brise-jet (14).

7. Réservoir de carburant et système de soutirage de carburant selon la revendication 6, **caractérisés en ce que** la conduite de soutirage (24, 26, 28) présente une portion flexible (26).

8. Appareil de chauffage d'appoint avec un réservoir de carburant et un système de soutirage de carburant selon l'une quelconque des revendications précédentes.

9. Véhicule automobile avec un réservoir de carburant et un système de soutirage de carburant pour un appareil de chauffage d'appoint selon l'une quelconque des revendications 1 à 8.

10. Procédé de soutirage de carburant pour un appareil de chauffage d'appoint pour soutirer du carburant d'un réservoir de carburant (10, 12) d'un véhicule automobile, le carburant étant soutiré d'un collecteur (22 ; 30) reçu dans le réservoir de carburant (10, 12), qui est affecté exclusivement à l'appareil de chauffage d'appoint, et le carburant étant aspiré hors du collecteur (22 ; 30) par le biais d'une conduite de soutirage (24, 26, 28 ; 24, 32, 28), dont l'extrémité d'aspiration est entourée par le collecteur (22 ; 30), qui est ouvert en haut au moins en partie, **caractérisé en ce que** le carburant contenu dans le collecteur s'écoule dans le collecteur par-dessus le bord supérieur du collecteur ouvert en haut au moins en partie à cet effet.
